# EUROPEAN PATENT APPLICATION

(11) **EP 1 857 027 A1**
(43) Date of publication of application: **21.11.2007**
(21) Application number: 07386012.4
(22) Date of filing: 11.05.2007
(51) Int. Cl.: A47J 31/40, B67D 1/00

(54) **Automatic instant "frappé" coffee machine**

(30) Priority: 15.05.2006 GR 20060100292
(71) Applicant: Petroudis, Thomas, 74653 Kunzelsau (DE)
(72) Inventor: Petroudis, Thomas, 74653 Kunzelsau (DE)
(74) Representative: Bakatselou, Vassiliki

(57) **Abstract**

The present invention concerns the preparation of instant 'frappé' coffee containing coffee and/or sugar and/or milk. The 'frappé' coffee drink is a coffee drink mixed by a high speed mixer (1), forming foam at the top surface of the final drink. The instant coffee machine is a table-top machine, covered by a special housing (11) having an electronic circuit control keyboard (14) for selecting the programmed quantity of water, coffee, sugar and milk that will be mixed, and a display. The machine has an in-built water cooler, a water filter, a sugar container, an air-tight coffee container, a milk container, dose meters and a special high-speed mixer with variable mixing height producing the characteristic foam in the drink to be served.

## Description

The present invention concerns the preparation of instant 'frappe' coffee containing coffee and/or sugar and/or milk. The 'frappé' coffee drink is a coffee drink mixed by a high speed mixer (1), forming a layer of foam on the surface of the final drink.

The machines existing today make instant coffee drinks using a simple mixing procedure involving feeding pressurised water before pouring the drink into the actual container that will be used (glass, cup, jar, etc.). This means that the prepared instant coffee does not have the distinctive foam characterising the 'frappé' instant coffee and the drink is not homogenised using mechanical means for quick mixing.

The thickly frothed 'frappé' coffee drink prepared automatically by the machine of the present invention is very similar to the hand-made 'frappé' coffee, but is prepared in much lesser time, and therefore the machine can be used in facilities serving the public (cafés etc.) requiring preparation of numerous drinks. This machine ensures consistency in flavour since the proportions are selected in accordance with the client's demands and therefore (through the dose system) will be always fixed, offering consistently the same flavour as desired by the client. The machine can also be used in other places with staff (e.g. offices, companies, etc.). Making just a few modifications, it can also be used with a coin slot in a vending machine.

The machine for making instant 'frappé' coffee is a table-top machine covered by a special housing (11) with an electronic circuit control board (14) for selecting the preset quantity of coffee, sugar and milk, making a coffee that can be:
depending on the quantity of coffee 'very strong, strong, medium or weak'
depending on the quantity of sugar 'very sweet, sweet, medium sweet, slightly sweet or without sugar'
depending on the quantity of milk 'with much milk, with little milk or with no milk'
The options are shown on the display.

The machine has an in-built water cooler, a water filter, a sugar container, an air-tight coffee container keeping the coffee fresh and maintaining its flavour, a milk container, special dose meters (10) and a special high-speed mixer with variable mixing height (1), ensuring effective dissolution of the sugar and coffee in the water, the effective homogenisation of the drink and the presence of the characteristic foam in the final drink.

The materials except the milk, i.e. the coffee, sugar and water (9, 15, 16) are fed into a special container (2) ending in a glass (3) located at the outer front part of the machine where the mixer (1) enters automatically. The mixer rotates at a high speed around its axis moving up and down at the same time, ensuring full mixing (17), homogenisation and foam in the drink that is now ready for consumption. The milk (if desired by the client) is the last ingredient fed into the mixture (16).

The electronic automatic control system (14) includes an electronic board, a keyboard, an indication display and sensors (that detect the existence of water, sugar, coffee or milk) activating a sound and visual alert when the level of the ingredients in the respective containers is low. When one ingredient is close to running out the machine stops immediately, unless you have selected the skipping procedure. In the event of damage or utility power cut, there is a special plug for connecting the machine to an independent power supply unit (battery).

The invention is described below, with the help of an example referring to the attached drawings in which:
Figure 1 illustrates the front view of the machine according to the present invention, with the door open.
Figure 2 illustrates a lateral view of the machine where you can see in detail, according to the present invention, the oscillating mixing axis, the ingredient funnel and the cup where the final drink is poured, and
Figure 3 shows an external lateral view of the whole machine, illustrating according to the invention the main body of the machine, its supports, the final drink cup and the cup basis with the draining grid.

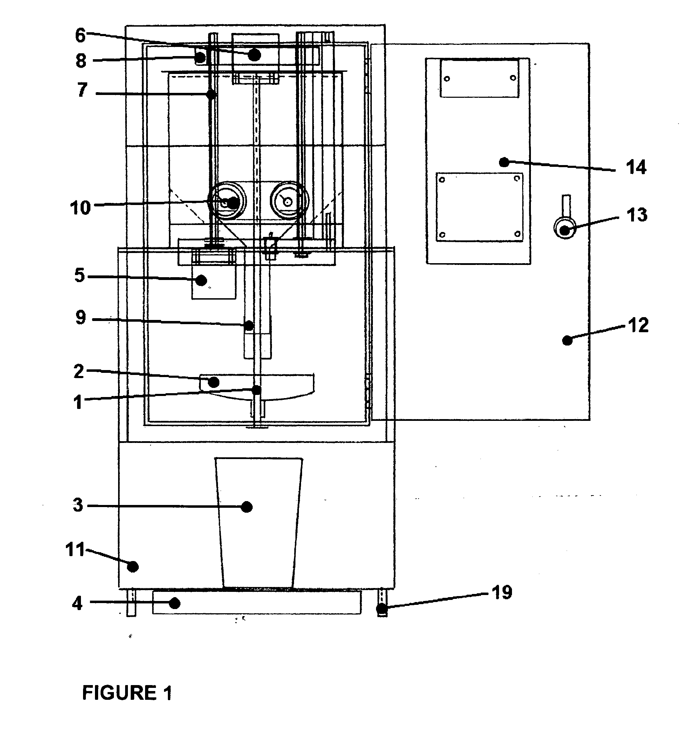

Figure 1 illustrates the front view of the machine with the door open (12) and more specifically the main body of the machine with its supports (19), housing among other things the water cooler, the milk cooler and the filters (11). Inside the machine there are the ingredient dose meters (10) which end to the reception funnel (2) through the delivery tubes (9). From the reception funnel, the ingredients fall into the final drink cup (3) and are stirred by the mixer (1). The mixer is supported by a frame (8) located at the part of the machine above the ingredient containers and moves by way of a rotating screw axis (7) producing the rotating movement of the mixer (6). However, apart from the rotating movement, the mixer also moves up and down (5), ensuring full mixing of the ingredients in the cup (3). The cup is supported by a base at the bottom part of the machine, which also has a draining grid (4).

The machine has a lock (13) on the front door also bearing the board with the electronic circuits, the keyboard and the control display of the machine (14).

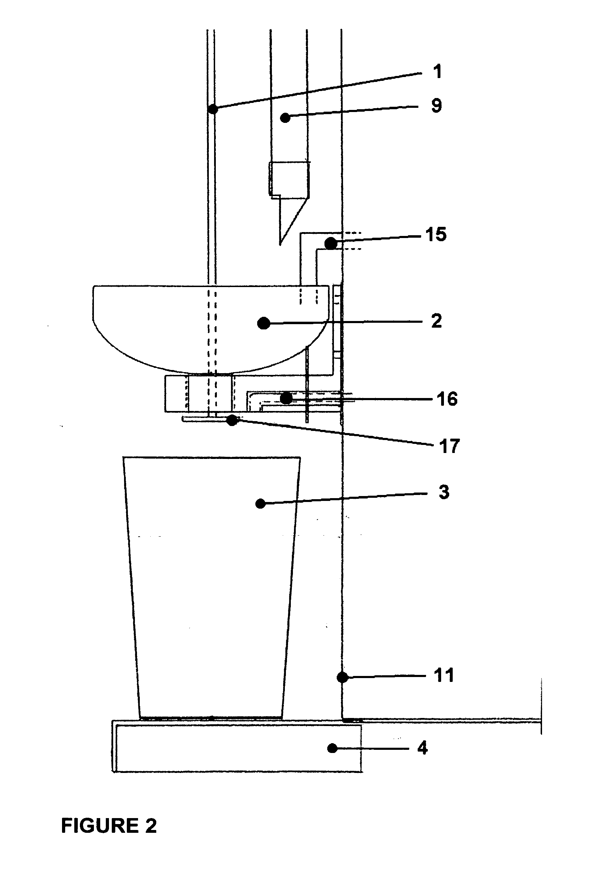

Figure 2 also illustrates the funnel for the ingredients (2) where the tubes delivering the ingredients end (9, 15). The cup of the final drink (3) is located below the funnel. The water delivery tube (16) ends in the cup and in there the mixer (1) stirs all the ingredients. The lower end of the mixing axis has the form of a cross within a ring in order to facilitate the transfer of the ingredients into the cup (17). The ends of the cross are inclined compared to the vertical axis in order to facilitate mixing.

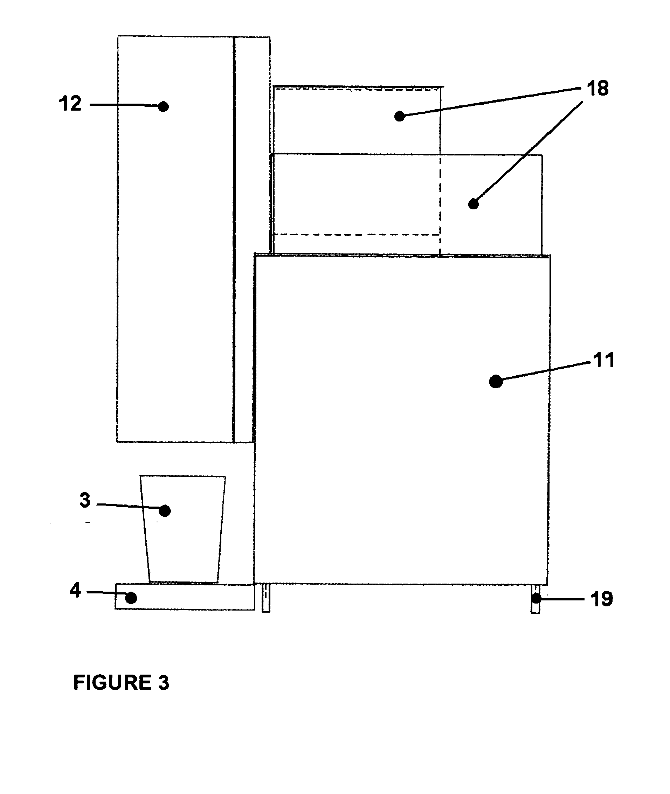

Figure 3 illustrates a lateral view of the machine, showing the main body of the machine (11), its supports (19), the cup of the drink to be served (3) and its base with the draining grid (4). It also illustrates the front door of the machine (12) and the external moving trapdoors used for re-filling the containers with the ingredients, and also cleaning and carrying out service works (18).

## Claims

1. Table-top machine for preparing cold instant 'frappé' coffee, i.e. a coffee drink that has been stirred with a high-speed mixer forming foam at the top of the drink to be served.

2. The instant coffee machine according to claim (1) can work with instant coffee in the form of powder or coarse particles or any other form of instant coffee including liquid form, with or without sugar and with or without milk. The milk can be fresh, long-life, evaporated, powder milk etc., as well as standard or light. The quantities of the ingredients can change depending on the desired result.

3. The instant coffee machine according to claim (1) is a table-top machine, covered by a special external housing that has an opening at the front part for placing the glass. In addition, the front part has a keyboard and a display (14) for selecting the quantity of coffee, sugar and milk by way of programmed settings. The water fed into the machine derives from the public water supply system or any other water system and passes through a filter into the in-built cooler in order to be cooled. The machine also has a container for sugar, an air-tight container for coffee that preserves its freshness and flavour, a milk container, dose meters (10) and a special high-speed mixer (1), with variable mixing height ensuring the effective dissolution of sugar and coffee in the water, the desired homogenisation of the drink and the presence of the characteristic foam in the drink to be served.

4. The instant coffee machine according to claim (3) can work without cooler when ice-cubes are to be placed (in order to achieve temperature reduction in the final drink that can be cold or frozen).

5. In the event of damage or utility power cut, the instant coffee machine according to claim (3) is equipped with a special plug for connection to an independent power supply source (battery).

6. The instant coffee machine according to claim (3) can be adjusted to make drinks in quantities bigger than one glass in case that more than one clients need to be served with the same coffee flavour at the same time. In addition, a cup, a jar or another container can be used instead of a glass.

7. The instant coffee machine according to claim (3) can be adjusted by the keyboard to change the programmed coffee, sugar and milk dose settings.

8. The milk tube and dose meter (16) of the instant coffee machine according to claim (3) can be flushed (cleaned) either automatically or manually, ensuring healthy operating conditions.

9. The dose meters according to claim (3) can be screwed, pneumatic or gravity-driven.

10. The instant coffee machine according to claim (3) can also be floor-mounted with a special cupboard for storing all necessary materials.

11. The instant coffee machine according to claim (3) can be incorporated into a vending machine and be used by third parties by way of self-servicing.

12. The instant coffee machine according to claim (3) can take a special programme in order to be used only as a water cooler.

13. The instant coffee machine according to claim (3) can take a special container for glasses or cups, whether plastic or otherwise for those using the vending machine.
